# EUROPÄISCHE PATENTSCHRIFT

(11) **EP 0 720 337 B1**
(45) Veröffentlichungstag und Bekanntmachung des Hinweises auf die Patenterteilung: **14.05.2003**
(21) Anmeldenummer: 95119479.4
(22) Anmeldetag: 11.12.1995
(51) Int. Cl.: H04L 29/14, G05B 9/03

(54) **Verfahren zur hochzuverlässigen und konsistenten Nachrichtenübertragung**
Method for highly reliable and consistent message communication
Méthode de communication de messages consistente et à haute fiabilité

(30) Priorität: 15.12.1994 DE 4444688
(43) Veröffentlichungstag der Anmeldung: 03.07.1996
(73) Patentinhaber: ABB PATENT GmbH, 68526 Ladenburg (DE)
(72) Erfinder: Dieterle, Werner, D-45478 Mülheim (DE); Kochs, Hans Dieter, D-47259 Duisburg (DE)
(74) Vertreter: Miller, Toivo

(56) Entgegenhaltungen:
- EP-A- 0 416 943
- US-A- 5 022 076
- OPERATING SYSTEMS REVIEW, Bd. 24, Nr. 1, 1.Januar 1990, Seiten 27-39, XP000564769 BABAOGLU O: "FAULT-TOLERANT COMPUTING BASED ON MACH*"
- OPERATING SYSTEMS REVIEW (SIGOPS), Bd. 25, Nr. 4, 1.Oktober 1991, Seiten 66-76, XP000328787 OESTREICHER D: "A SIMPLE RELIABLE GLOBALLY-ORDERED BROADCAST SERVICE"
- PROCEEDINGS OF THE COMPUTER NETWORKING SYMPOSIUM, GAITHERSBURG, MD, USA, XP000646867 W. E. BURR: "A fault tolerant hierarchical broadcast network"

## Beschreibung

Die Erfindung bezieht sich auf ein Verfahren zur Nachrichtenübertragung gemäß dem Oberbegriff des Anspruchs 1.

Ein solches Verfahren zur Gewährleistung und Aufrechterhaltung der Nachrichtenübertragung zwischen zwei lokalen Netzwerken wird im Dokument EP 0 416 943 A2 (HONEYWELL INC) 13.März 1991, beschrieben.

Zu seiner Durchführung werden maßgeblich zwei NIM's (network interface modules) eingesetzt, die sich durch wechselseitige zyklische Statusabfragen gegenseitig überprüfen und somit ein redundantes System bilden. Ein erster primärer, dominanter NIM empfängt und verarbeitet von einem der Netze kommende Meldungen oder Informationen und speist diese in das jeweils andere Netz ein. Erst im Störfall des primären, dominanten NIM wird ein zweiter, sekundärer NIM aktiv und übernimmt alternativ dessen Aufgaben und Funktionen, wie beispielsweise Datenverarbeitung und/oder -weiterleitung. Aktuelle auf dem dominanten NIM befindliche und verarbeitete Daten oder Informationen werden zur Aktualisierung des auf dem zweiten NIM befindlichen Datenbestandes zyklisch auf diesen übertragen. Hierbei handelt es sich jedoch lediglich um ein einseitiges Verfahren. Beide NIM's sind weder empfangs- noch sendeseitig gleichberechtigt. Es findet keine Synchronisation und/oder parallele Verarbeitung empfangener Meldungen oder Informationen statt. Eine konsistente Datenverarbeitung und -weiterleitung im Störfall ist hier nicht gegeben, Datenverluste sind möglich.

Ein entsprechendes Verfahren für den Einsatz in verteilten Rechnersystemen wird in Özalp Babaoglu: Fault-Tolerant Computing Based on Mach, ACM Operating Systems Review, Vol. 24, No. 1, Januar 1990, Seite 27 bis 39 beschrieben.

Kern des daraus bekannten Übertragungskonzepts ist das sogenannte Queue-and-Count Verfahren für jeweils redundante Prozeßpaare (Primär- und Backup-Prozeß). Dieses Verfahren setzt einen sogenannten atomaren 3-Wege Nachrichtentransport (atomic Multicast) voraus, d.h. eine Nachricht des sendenden Primär-Prozesses muß sowohl am Backup-Prozeß des Senders als auch am primären Empfänger und dessen Backup eintreffen oder an keinem der drei genannten (Atomaritätsprinzip). Der Nachrichtenempfang hat mit jeweils identischer Reihenfolge zu erfolgen (totale Reihenfolge). Das Verfahren ist zugeschnitten auf Transaktionssysteme, es weist für den Einsatz in der industriellen Leittechnik mehrere Nachteile auf. So ist keine schnelle Rekonfiguration redundanter Komponenten möglich, wie sie im Bereich der Prozeßdaten-Verarbeitung gefordert ist. Die Synchronisation redundanter Instanzen erfolgt jeweils prozeßbezogen, dies führt zu hohem Synchronisationsaufwand bei großer Prozeßanzahl, wie sie beispielweise in der industriellen Leittechnik gegeben ist. Das Verfahren erfordert weiterhin einen immens hohen Kommunikationsaufwand, speziell für den notwendigen atomaren Übertragungs-Mechanismus. Dieses Verfahren kann wesentliche, nachfolgend noch zu erläuternde Anforderungen nicht erfüllen und ist deshalb in der industriellen Leittechnik nicht einsetzbar.

In der US 5 022 076 (M. J. ROSENOW) 4. Juni 1991 ist ein redundantes Datenverschlüsselungssystem mit einer Master/Slave-Konfiguration und zwei identischen Verschlüsselungseinrichtungen beschrieben. Die Datenverschlüsselung erfolgt hierbei parallel auf beiden Verschlüsselungseinrichtungen des redundanten Systems, wobei die verschlüsselten Datensätze ausgangsseitig lediglich von einer Einrichtung, dem Master, weitergeleitet werden. Die Funktionstüchtigkeit beider Verschlüsselungseinrichtungen sowie des gesamten Systems wird mittels Laufzeitüberwachungssignalen getestet bzw. überwacht. Bei Fehlfunktion einer der beiden Einrichtungen übernimmt die jeweils andere Verschlüsselungseinrichtung deren Aufgaben.

Weitere, in der Literatur bekannte Verfahren, sogenannte Zweiphasen-Konzepte, können die Anforderungen ebenfalls nicht in vollem Umfang erfüllen. Aufgrund der mehrphasigen Übertragung von Information zu mehreren Empfängern erweisen sich diese Konzepte weiterhin als sehr ineffizient. Aus diesen Gründen sind auch diese bekannten Zweiphasen-Konzepte für industrielle Leitsysteme nicht verwendbar.

Das erfindungsgemäße Verfahren gemäß Anspruch 1 ist ausgerichtet auf den Einsatz in Systemen der industriellen Leittechnik. Der Aufbau dieser Systeme sowie die Anforderungen an diese Systeme werden nachfolgend kurz erläutert.

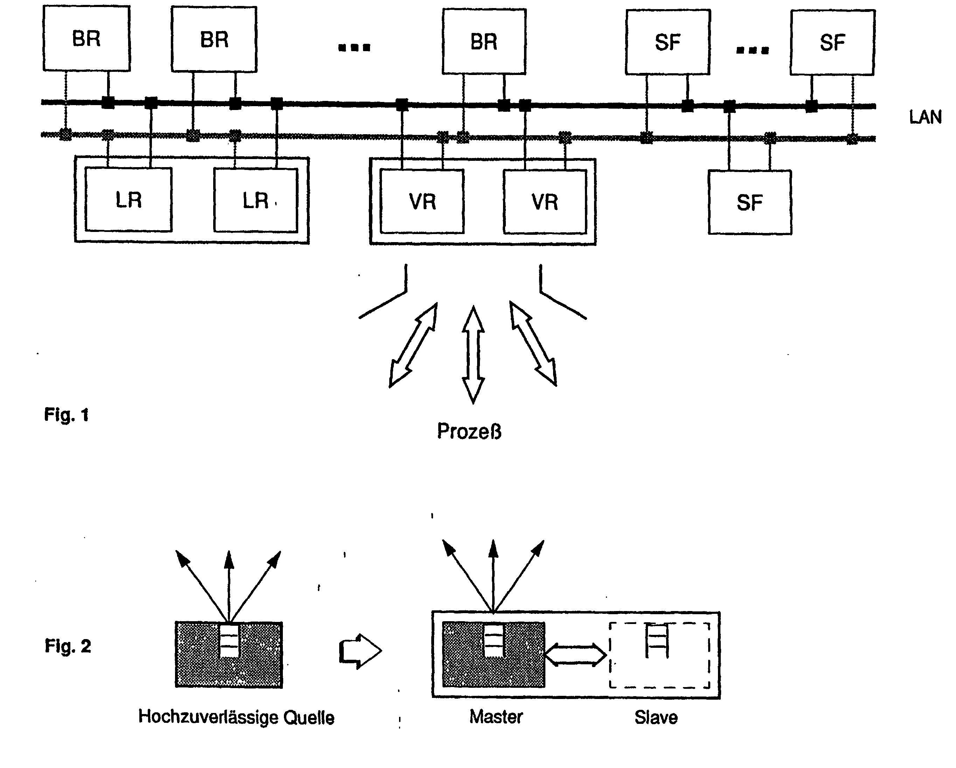

**Fig. 1** zeigt einen typischen Aufbau eines Leitsystems, bestehend aus mehreren Rechnerkomponenten wie Vorrechner (VR) zur Prozeßkopplung, Leitrechner (LR) zur Bearbeitung leittechnischer Grundfunktionen (sog. SCADA-Funktionen), Bedienplatzrechner (BR) zur Prozeß-Visualisierung und zusätzlichen Rechnern zur Bearbeitung optionaler Sekundärfunktionen (SF). Die Rechner sind über ein Lokales Netzwerk (LAN), typischerweise Ethernet, gekoppelt. Zur Erhöhung der Zuverlässigkeit des Gesamtsystems werden Rechner wichtiger Funktion (in Fig. 1: VR und LR) sowie der LAN-Bus redundant ausgeführt. Die Rechner operieren auf einem jeweils lokal gehaltenen, fortlaufend aktualisierten Prozeßabbild (dezentrale Datenhaltung). Änderungsdaten werden als Nachrichten versandt. Aufgrund der Verteilung bzw. Redundanz von Funktionen und Datenbeständen ergeben sich komplexe Datenflüsse im verteilten System. Der Nachrichtenfluß vom Leitrechner (LR) zum Bedienplatzrechner (BR) zum Zweck der Visualisierung, bzw. zu den Sekundärfunktionen (SF) überwiegt.

Die wesentlichen Anforderungen an Leitsysteme sind hohe Zuverlässigkeit, kurze, garantierte Reaktionszeiten sowie Konsistenz der verteilten Datenbestände.

Für Rechner wichtiger Funktion ist hohe Zuverlässigkeit, d.h. unterbrechungsfreier Systembetrieb auch bei Ausfall von Systemkomponenten gefordert. Dies macht die Verwendung von Redundanz sowie geeigneter Fehlertoleranz-Maßnahmen notwendig. Bei Rekonfigurationen infolge von Fehlern/Ausfällen im System sind die Echtzeit-Eigenschaften nach möglichst kurzer Zeitdauer wiederherzustellen.

Echtzeitverhalten der Systeme erfordert die Verwendung effizienter Übertragungsverfahren zur Minimierung der Rechner- und Buslast.

Datenkonsistenz, d.h. übereinstimmender Informationsstand aller Teilnehmer innerhalb bestimmter Zeitdauer, ist Voraussetzung für den bestimmungsgemäßen Betrieb der Leitsysteme. Datenkonsistenz ist trivial im fehlerfreien Fall, erfordert aber bei Ausfällen/Rekonfigurationen im System spezifische Maßnahmen zur nahtlosen Fortführung des Nachrichtenaustauschs.

Zur Kostenminimierung beim Systemaufbau ist es weiterhin anzustreben, soweit möglich standardisierte Komponenten zu verwenden.

Aus den aufgeführten systemglobalen Anforderungen resultieren sehr hohe Anforderungen an die Kommunikation in verteilten Leitsystemen:
- Identische Abfolge der Änderungsinformation eines Elements verteilter Datenbestände für alle Exemplare, unabhängig vom Entstehungsort der Information (Führungskompetenz).
- Nachrichtenaustausch ohne Verlust, Verfälschung, Vervielfältigung und Vertauschung von Information (Führungskonsistenz). Vertauschung bezieht sich auf Nachrichten eines Absenders, sog. FIFO-Reihenfolge.
- Nachrichten an mehrere Empfänger müssen an alle Empfänger oder an keinen übertragen werden (Atomaritätsprinzip).
- Empfang von Nachrichten in jeweils identischer Reihenfolge bei mehreren Sendern und mehreren Empfängern im System (totale Reihenfolge von Nachrichten).
- Vermeidung von Überholeffekten von Ursprungsinformation und abgeleiteter Information (kausale Reihenfolge von Nachrichten).
- Informationsübertragung mit hoher Zuverlässigkeit (unterbrechungsfreier Betrieb der Informationsquelle).
- Datenkonsistenz umfaßt die fünf erstgenannten Anforderungen an die Nachrichtenübertragung.

Führungskompetenz besagt, daß bei verteilten Datenbeständen genau ein Original-Datenbestand existiert, alle weiteren Exemplare werden als Kopie dieses Originals geführt. Änderungsinformation der Datenbestände wird also grundsätzlich über eine Informationsquelle, die sogenannte Führungsinstanz geführt, unabhängig vom Entstehungsort der Änderungsinformation. Führungskompetenz definiert eine einheitliche Änderungsabfolge verteilter Datenbestände, ist aber nur wirksam, sofern auch die weiteren Anforderungen zum konsistenten Nachrichtenaustausch erfüllt sind.

Probleme bezüglich der Führungskonsistenz entstehen durch Übertragungsfehler bzw. Bus- oder Empfängerausfall. Diese Fehler- bzw. Ausfalltypen sind von der Informationsquelle aus über spezifische Maßnahmen zu beherrschen (z.B. Wiederholung bei Übertragungsfehlern, automatische und konsistente Busumschaltung bei Busausfall).

Totale und kausale Reihenfolge übertragener Nachrichten wird durch zeitlichen Indeterminismus im System beeinträchtigt (z.B. bei stochastischem Übertragungsverfahren bzw. mehreren Absendern von Information). Zur Gewährleistung sind aufwendige Ordnungs-Mechanismen notwendig, speziell bei gerichteter Übertragung.

Wesentlicher Problempunkt für die nachfolgenden Ausführungen ist der Ausfall der Informationsquelle (Führungsinstanz) selbst, er beeinträchtigt das Atomaritätsprinzip (speziell bei gerichteter Nachrichtenübertragung an mehrere Empfänger) sowie die Forderung eines hochzuverlässigen Systembetriebs (unterbrechungsfreier Nachrichtenstrom).

Um den Anforderungen an die Nachrichtenübertragung in verteilten Leitsystemen zu genügen hat die Führungsinstanz eine konsistente Übertragung bei gleichzeitiger hoher Zuverlässigkeit sicherzustellen. Existierende Kommunikations- und Rechnersysteme für verteilte Anwendungen erfüllen diese Anforderungen nicht. Dies gilt für verteilte Systeme im allgemeinen bzw. für mit standardisierten Komponenten aufgebaute Systeme im speziellen.

Davon ausgehend liegt der Erfindung die Aufgabe zugrunde, ein Verfahren zur Nachrichtenübertragung anzugeben, welches die aufgeführten Anforderungen ohne Einschränkung erfüllt, bei möglichst geringem Kommunikations-Aufwand.

Diese Aufgabe wird bei einem Verfahren nach dem Oberbegriff der Anspruchs 1 durch dessen kennzeichnende Merkmale gelöst.

Das Verfahren beruht auf der Kombination von gesicherter Nachrichtenübertragung, redundanter Ausführung der Informationsquelle und dem Prinzip der Führungskompetenz, auf der Basis spezieller Synchronisations- und Rekonfigurations-Mechanismen.

Vorteilhafte Ausgestaltungen der Verfahren ergeben sich aus den Unteransprüchen und der nachstehenden Beschreibung der Erfindung.

Notwendige Maßnahmen (beispielsweise Quittierverfahren) zur Gewährleistung der Datenkonsistenz bei Bus- und Empfängerausfällen sowie Übertragungsfehlern sind von der Informationsquelle aus steuerbar, sie werden nachfolgend nicht weiter berücksichtigt. Kritisch ist insbesondere der Ausfall der Quelle selbst - speziell bei gerichteter Übertragung. Er führt empfangsseitig zu unterschiedlichem Informationsstand, d.h. zu Inkonsistenzen (Problembeispiel: Ausfall des Senders, ein Empfänger hat eine Nachricht erhalten, ein anderer Empfänger aber nicht. Wie läßt sich der unterschiedliche empfangsseitige Informationsstand vermeiden bzw. korrigieren?).

Das erfindungsgemäße Verfahren basiert auf der redundanten Ausführung der Informationsquelle nach dem Master/Slave-Prinzip (vergl. **Fig. 2**). Zielsetzung ist es, mit einem Doppelrechner-System eine Informationsquelle mit dem externen Sendeverhalten eines Rechners zu realisieren. Master und Slave werden eingangsseitig und intern synchronisiert, d.h. Master und Slave erhalten und verarbeiten gleiche Information, mit jeweils identischer Reihenfolge (Zwangssynchronisation). Damit erzeugen Master und Slave auch sendeseitig identische Nachrichten mit identischer Kennung (Sequenznummer). Aufgrund der Verwendung von Multitasking-Betriebssystemen ergibt sich aber im allgemeinen eine unterschiedliche Nachrichten-Reihenfolge von Master und Slave. Nur eine Informationsquelle, vorzugsweise der Master, ist sendeaktiv. Master und Slave überwachen sich gegenseitig. Die Überwachung erfolgt durch zyklischen Austausch von Überwachungsinformation ("I'm alive").

Zur Sicherung der Konsistenz der Übertragung bei Ausfall der aktiven Informationsquelle (Master) wird ein sendeseitiges Synchronisations- und Rekonfigurationskonzept verwendet, welches auch bei Ausfall der aktiven Quelle ein konsistentes externes Übertragungsverhalten der redundanten Quelle sicherstellt. Hierzu werden Master und Slave sendeseitig fortlaufend gemäß dem aktuellen Sendezustand des Master synchronisiert, um sicherzustellen, daß der Slave im Falle eines Masterausfalls dem Master bezüglich dessen Sendeaktivität entspricht.

Bei Ausfall des Slave führt weiterhin der Master die Übertragung durch, die Synchronisation des Slave entfällt.

Die sendeseitige Synchronisation beruht auf einem mehrphasigen Übertragungskonzept. Der Slave synchronisiert den Master bezüglich der nächsten zu übertragenden Nachricht (Reihenfolge-Synchronisation). Anschließend erfolgt die Übertragung der Nachricht vom Master zu den Empfängern. Nach erfolgreicher Übertragung zeigt der Master dem Slave durch eine Synchronisations-Nachricht an, daß die Übertragung korrekt abgeschlossen wurde (Übertragungs-Synchronisation).

Anmerkung: Die Reihenfolge-Synchronisation des Slave durch den Master wäre ebenfalls möglich. Die bezüglich der Reihenfolge synchronisierte Komponente hat aber eine höhere Rechenlast, d.h. diese Komponente bestimmt die Verarbeitungs-Geschwindigkeit des Doppelrechner-Systems. Zur Vermeidung zusätzlicher Maßnahmen zur Synchronisation der Verarbeitungs-Geschwindigkeit sollte die sendeaktive Komponente (d.h. der Master) die Verarbeitungs-Geschwindigkeit bestimmen. Aus diesem Grund erfolgt die Reihenfolge-Synchronisation des Master durch den Slave.

Master und Slave überwachen sich gegenseitig, ein Ausfall des Master wird vom Slave durch das Ausbleiben von Überwachungs-Information erkannt. In diesem Fall schaltet sich der Slave aktiv, er führt die letzte vom Master noch nicht als erfolgreich abgeschlossen angezeigte Übertragung erneut durch. Durch die vorhergehende Reihenfolge-Synchronisation werden mögliche Inkonsistenzen der Sendereihenfolge von Master und Slave vermieden. Durch die Übertragungs-Synchronisation werden mögliche Nachrichtenverluste beim Wechsel der aktiven Informationsquelle vermieden. Im Fehlerfall (Ausfall Master) sind durch die erneute Übertragung von Nachrichten durch den Slave empfangsseitige Duplikate möglich, diese werden anhand einer fortlaufenden Sequenznummer übertragener Nachrichten vom Empfänger erkannt und verworfen. Eine empfangsseitige Duplikaterkennung ist auch notwendig, um durch Übertragungsfehler auftretende Duplikate auszufiltern (beispielsweise bei Verlust von Bestätigungen und automatischer Wiederholung durch den Sender), d.h. bereits existierende Mechanismen können genutzt werden, weitere empfangsseitige Maßnahmen sind nicht notwendig.

Die Maßnahmen der Synchronisation und Rekonfiguration werden nachfolgend anhand eines Realisierungsbeispiels erläutert.

Eine nach dem erfindungsgemäßen Verfahren arbeitende Informationsquelle weist extern das Sendeverhalten einer ausfallsicheren Quelle auf. Die notwendigen Synchronisations-Maßnahmen erfolgen transparent für die Empfänger, d.h. deren Software kann unabhängig von der Senderstruktur (redundant/nicht redundant) gestaltet werden.

Für den Nachrichtenaustausch wird ein gesichertes Übertragungsverfahren mit für den Absender auswertbarer Empfangsbestätigung vorausgesetzt, der empfangsseitige Nachrichtenerhalt muß für den Absender verifizierbar sein. Dies ist zur sequentiellen Abfolge der Übertragungsphasen notwendig, um Verluste bzw. Vertauschungen von Nachrichten im Fehlerfall zu vermeiden. So darf beispielsweise die Übertragungs-Synchronisation des Slave durch den Master erst gestartet werden, nachdem die Übertragung der Nachricht an die Empfänger für den Master verifizierbar abgeschlossen ist.

Das erfindungsgemäße Verfahren ist an keinen Standard und an kein bestimmtes Übertragungsprinzip gebunden. Vorteilhafte Ausgestaltungen sind aber auf der Basis standardisierter Bussysteme und Kommunikations-Protokolle möglich. Bereits vorhandene Teilfunktionen können genutzt werden, beispielsweise CRC-Prüfsumme.

Das erfindungsgemäße Verfahren erfüllt alle Ansprüche ohne Einschränkungen. Die Führungskonsistenz der Übertragung wird durch den nahtlosen Wechsel der Quelle im Fehlerfall sichergestellt. Bei Ausfall der aktiven Quelle wird die Übertragung unterbrechungsfrei von der passiven Quelle fortgesetzt, ohne Verlust, Vertauschung und Vervielfältigung von Nachrichten. Damit ist auch das Atomaritätsprinzip gewährleistet, Nachrichten werden stets an alle Empfänger übertragen.

Das Prinzip der Führungskompetenz stellt die übereinstimmende Änderungsabfolge eines bestimmten Elements verteilter Datenbestände sicher. Durch Erweiterung dieses Prinzips auf Nachrichten beliebigen Typs lassen sich auch die Anforderungen der kausalen und totalen Reihenfolge erfüllen. Nachrichten beliebiger Teilnehmer werden über die entsprechend dem erfindungsgemäßen Verfahren aufgebaute Führungsinstanz geführt. Der Serialisierungseffekt der Führungsinstanz stellt in Kombination mit deren konsistenter und hochzuverlässiger Übertragung die kausale und konsistente Übertragung sicher. Aufwendige Ordnungs-Mechanismen lassen sich hierdurch vermeiden. Dieser Ansatz ist in den betrachteten Leitsystemen sehr effizient anwendbar, da aufgrund des asymmetrischen Lastverhaltens industrieller Leitsysteme das Datenaufkommen im wesentlichen von einer Quelle, dem Leitrechner (LR), geprägt wird. Damit ist der Leitrechner als Führungsinstanz gemäß dem erfindungsgemäßen Verfahren prädestiniert. Alle Prozeßdaten im System fließen über den Leitrechner und werden von diesem an die weiteren Teilnehmer verteilt, das Datenaufkommen in umgekehrter Richtung ist vernachlässigbar. Es sind aber auch mehrere Führungsinstanzen im verteilten System möglich.

Grundsätzlich ergibt sich für Verfahren zur hochzuverlässigen und konsistenten Übertragung von Nachrichten das Minimum des Nachrichtenaufwands der Übertragung für den (theoretischen) Fall einer Informationsquelle mit inhärent ausfallsicherem Verhalten. Der Nachrichtenaufwand des erfindungsgemäßen Verfahrens nähert sich mit zunehmender Empfängerzahl diesem Optimum an. Das erfindungsgemäße Verfahren weist selbst im Vergleich zu Zweiphasen-Konzepten, welche wie einführend erläutert den Anforderungen nicht in vollem Umfang genügen, einen signifikant reduzierten Nachrichtenaufwand auf.

Gemäß einer vorteilhaften Ausgestaltung können zur Reduzierung der Sende- und Empfangslast der Teilnehmer Nachrichten zu Blökken zusammengefaßt und übertragen werden. Damit läßt sich die Effizienz der Übertragung wesentlich steigern (Protokoll-Bearbeitung und Kontext-Wechsel für jede zu übertragende Nachricht werden vermieden). Diese Erweiterung des erfindungsgemäßen Verfahrens auf blockorientierte Übertragung wird ebenfalls anhand des nachfolgenden Ausführungsbeispiels näher erläutert.

Eine vereinfachte Ausgestaltung des erfindungsgemäßen Verfahrens ergibt sich bei der Realisierung mit Übertragungsverfahren, welche über die gesicherte Übertragung hinaus konsistente Nachrichtenübertragung gewährleisten, beispielsweise dem "Verfahren zur konsistenten Nachrichtenübertragung" gemäß Patentanmeldung DE 195 18 357 . Vorhandene Eigenschaften konsistenter Übertragungsverfahren lassen sich in vorteilhafter Weise bei der Realisierung des erfindungsgemäßen Verfahrens verwenden. Das erfindungsgemäße Verfahren wird nachfolgend anhand eines Ausführungsbeispiels erläutert.

Es wird auf nachstehende Zeichnungsfiguren bezug genommen:
- Fig. 1: Aufbau eines Leitsystems,
- Fig. 2: redundant ausgeführte Informationsquelle,
- Fig. 3A bis 3D: Synchronisationsabfolge (ohne Multitasking, ohne Fehler),
- Fig. 4A bis 4D: Synchronisationsabfolge (ohne Multitasking, Fehlerfall),
- Fig. 5A bis 5D: Problemdarstellung: fehlende Reihenfolge-Synchronisation,
- Fig. 6A bis 6D: Übertragungs- und Reihenfolge-Synchronisation (ohne Fehler),
- Fig. 7A bis 7F: Synchronisation bei Masterausfall.

Die beschriebene Realisierung basiert auf gerichteter und bestätigter Übertragung von Nachrichten. Eine erfolgreiche Übertragung ist für den Absender durch Empfang einer Bestätigung erkennbar. Weiterhin erfolgt die Übertragung gesichert durch CRC-Prüfsumme, Verfälschungen während der Übertragung werden erkannt, die Übertragung wiederholt. Für die Realisierung des Verfahrens wird weiterhin angenommen, daß Rechner nur korrekte Nachrichten versenden (sendeseitige Nachrichtenintegrität) und fehlerhafte Rechner sich passiv schalten (Pail-Silent-Verhalten).

Master und Slave werden eingangsseitig und intern synchronisiert und erzeugen gleiche Nachrichten mit jeweils identischer Kennung, welche aus der Angabe des Nachrichtentyps und einer fortlaufenden, von der Absender-Task vergebenen Sequenznummer besteht. Die Nachrichtenabfolge von Master und Slave ist unterschiedlich (Multitasking). Nur der Master ist bezüglich der Nachrichtenübertragung zu den Empfängern sendeaktiv. Master und Slave überwachen sich gegenseitig durch Versenden eines zyklischen Überlebenssignals. Optional können Datenaustausch für die Synchronisation und Überlebenssignal auch gekoppelt werden.

Die Beschreibung erfolgt unter Angabe des zeitlichen Ablaufs der Synchronisation im Normalbetrieb sowie der Rekonfiguration im Fehlerfall (Ausfall Master), für ein verteiltes System, bestehend aus einer redundant ausgeführten Informationsquelle (Master M, Slave S) und zwei Empfängern (E1 und E2). Die aktiven Rechner sind jeweils dunkel gezeichnet. Es versteht sich, daß das Verfahren jedoch nicht auf eine Übertragung zu nur zwei Empfängern beschränkt ist.

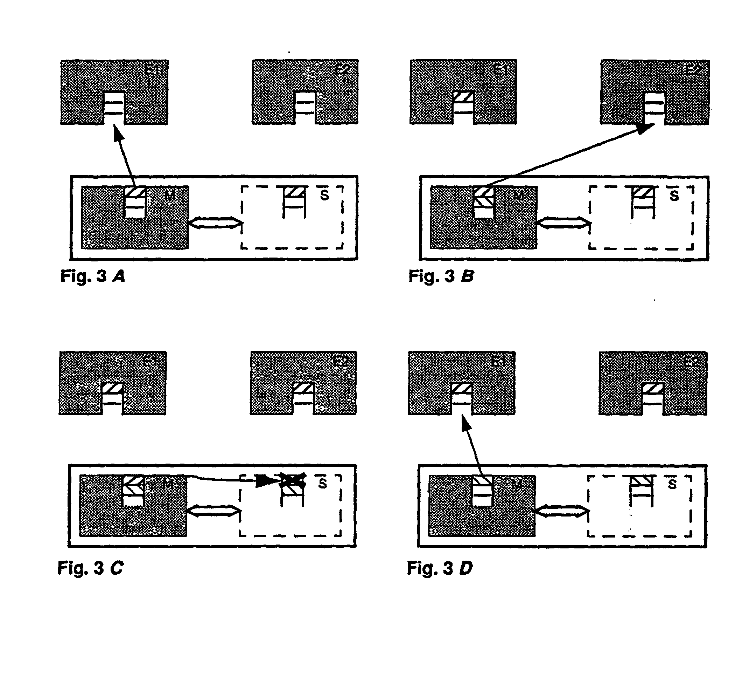

Die Betrachtung erfolgt zunächst unter der vereinfachenden Annahme, daß Master und Slave sendeseitig Nachrichten mit gleicher Reihenfolge erzeugen (kein Multitasking). Identische Nachrichten sind in den Zeichnungsfiguren jeweils durch eine identische Schraffur kenntlich gemacht. Die Figuren **3A** bis **3B** zeigen die zeitliche Abfolge der Synchronisation von Master und Slave für diesen Fall. Der Master überträgt eine Nachricht an E1 und E2 **(Fig. 3A**, **Fig. 3B**). Nach erfolgreicher Übertragung an die Empfänger zeigt der Master dies dem Slave an, indem die Nachricht selbst bzw. die Nachrichtenkennung zum Slave übertragen wird (**Fig. 3C**). Der Slave streicht die vom Master synchronisierte Nachricht aus dem eigenen Sendepuffer, der Master beginnt mit der Übertragung der nächsten Nachricht an die Empfänger (**Fig. 3D**).

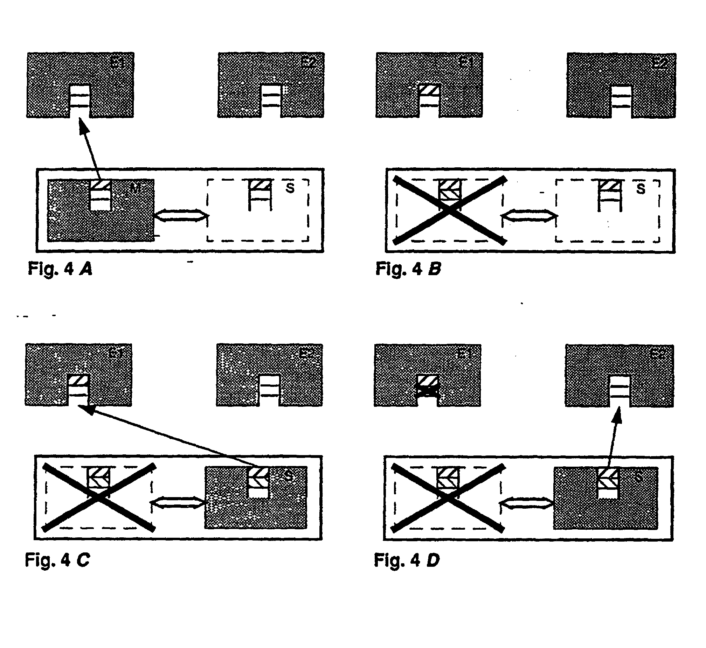

Die **Fig. 4A bis 4D** zeigen die zeitliche Abfolge im Fehlerfall. Ausgangspunkt sei wiederum die Übertragung einer Nachricht durch den Master an die Empfänger (**Fig. 4A**). Bei Ausfall des Master **(Fig. 4B)** wird der Slave sendeaktiv und führt die Übertragung erneut durch **(Fig. 4C, 4D).** Durch die Synchronisation nach erfolgreicher Übertragung im fehlerfreien Fall werden Nachrichtenverluste bei Ausfall des Master vermieden.

Bei Verwendung von Multitasking-Betriebssystemen erzeugen Master und Slave die gleichen Nachrichten, aber mit im allgemeinen unterschiedlicher sendeseitiger Nachrichten-Reihenfolge (FIFO-Reihenfolge). Nach einem Master-Ausfall überträgt der Slave bei Verwendung des vorstehenden Verfahrens zunächst im allgemeinen eine andere Nachricht als die letzte Sendenachricht des Master. Damit ist eine einheitliche Reihenfolge der Nachrichten (FIFO-Reihenfolge) auf Empfangsseite nicht gewährleistet. Eine übereinstimmende FIFO-Reihenfolge von Master und Slave ist aber eine notwendige Voraussetzung für die Datenkonsistenz.

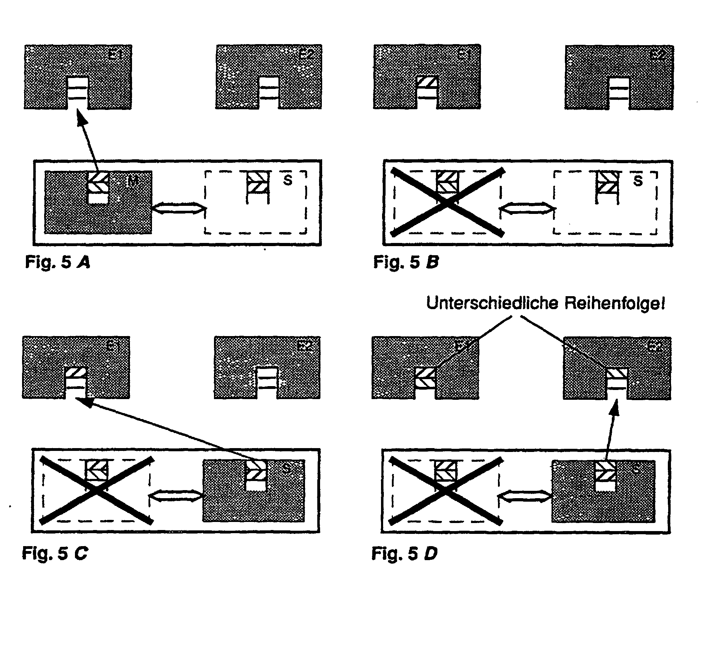

Die **Fig. 5A** bis **5D** verdeutlichen die Problematik. Der Master überträgt eine Nachricht an die Empfänger (**Fig. 5A**). Empfänger E1 hat die Nachricht des Master erhalten und verarbeitet diese. Vor der Übertragung zum Empfänger E2 fällt der Master aus (**Fig. 5B**). Der Slave erkennt den Ausfall und führt die Übertragung entsprechend der Nachrichten-Abfolge im eigenen Sendepuffer fort (man beachte die unterschiedliche Nachrichten-Reihenfolge in den Sendepuffern von Master und Slave). Die Empfänger erhalten die Nachrichten nun in der FIFO-Reihenfolge des Slave, Empfänger E1 verarbeitet die Nachricht aber bereits in der FIFO-Reihenfolge des Master (**Fig. 5C, 5D**). Dies führt zu Inkonsistenzen der Empfangs-Reihenfolge und damit auch der Datenbestände selbst.

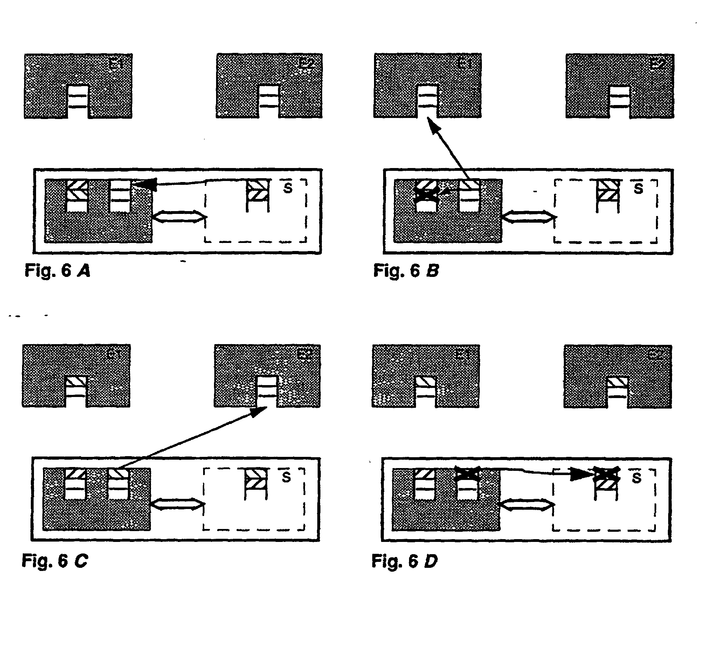

Zur Lösung des Problems wird neben der Synchronisation des Slave mit den vom Master übertragenen Nachrichten (Übertragungs-Synchronisation) auch die FIFO-Reihenfolge (d.h. die Sendereihenfolge von Nachrichten) synchronisiert (Reihenfolge-Synchronisation). Die **Fig. 6A** bis **6D** zeigen den Ablauf im fehlerfreien Betrieb. Der Slave überträgt die nächste zu übertragende Nachricht (bzw. deren Kennung) an den Master, d.h. er synchronisiert den Master bezüglich der Sendeabfolge (**Fig. 6A**). Der Master führt zwei Sendepuffer: Den Slave-Sendepuffer (hier werden die vom Slave bezüglich der Reihenfolge synchronisierten Nachrichten eingetragen) und den eigenen Sendepuffer (hier werden die selbst erzeugten Nachrichten in der eigenen Sendereihenfolge eingetragen). Der Master trägt die Nachricht des Slave im Slave-Sendepuffer ein, die entsprechende Nachricht wird aus dem eigenen Sendepuffer gestrichen (**Fig. 6B**). Anmerkung: Diese Vorgehensweise gilt nur für die Synchronisation durch Übertragung der Nachricht selbst. Bei Synchronisation über Nachrichtenkennung besitzt der Master nur einen Nachrichtenpuffer, Nachrichten müssen entsprechend der vom Slave vorgegebenen Reihenfolge neu geordnet werden, das Entfernen von Nachrichten entfällt für diese Phase.

Wie einführend bereits erläutert, hat die Reihenfolge-Synchronisation des Master durch den Slave den Vorteil, daß die sendeaktive Komponente (Master) die Verarbeitungs-Geschwindigkeit des Doppelrechner-Systems bestimmt (die bezüglich der Reihenfolge synchronisierte Komponente hat intern durch Vergleich bzw. Umordnen von Nachrichten einen höheren Protokollaufwand, d.h. sie bestimmt die Verarbeitungs-Geschwindigkeit).

Nach erfolgter Reihenfolge-Synchronisation wird vom Master die Übertragung der Nachricht zu den Empfängern durchgeführt **(Fig. 6B, 6C**). Nach erfolgreicher Übertragung kann die Nachricht aus dem Sendepuffer des Master gestrichen werden. Eine Synchronisationsnachricht des Master zum Slave (Übertragungs-Synchronisation) veranlaßt letzteren, die Nachricht aus dem eigenen Sendepuffer zu entfernen **(Fig. 6D**).

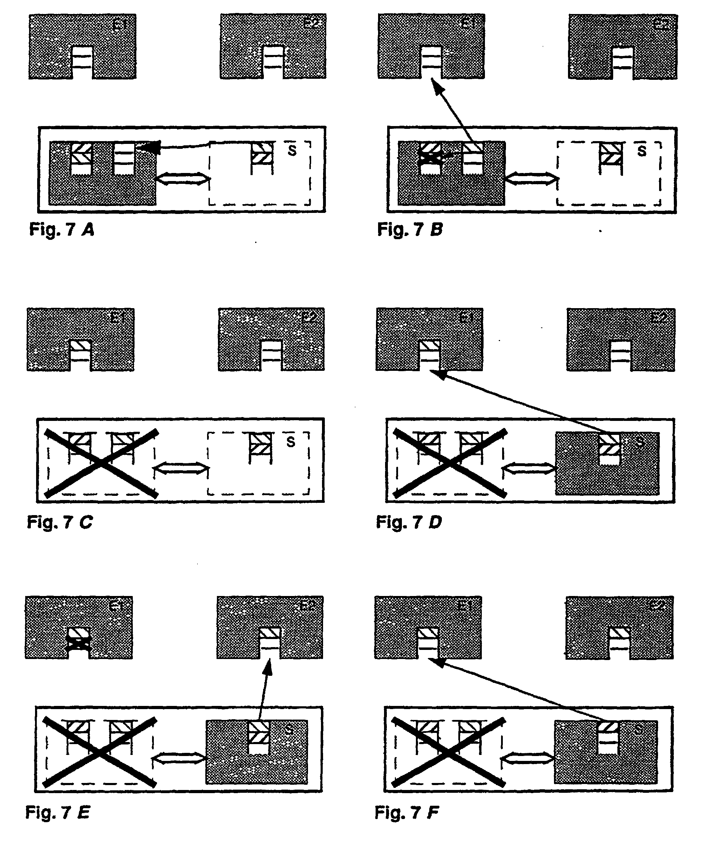

Die zeitliche Abfolge bei Ausfall des Master ist in den **Fig. 7A** bis **7F** dargestellt. Der Master wird vom Slave vor der Übertragung an die Empfänger bezüglich der Reihenfolge synchronisiert und trägt die erhaltene Nachricht im Slave-Sendepuffer ein (**Fig. 7A**). Anschließend beginnt der Master mit der Übertragung der vom Slave erhaltenen Nachricht an die Empfänger **(Fig. 7B).** Bei Ausfall des Master während der Übertragung **(Fig. 7C**) wird der Slave aktiviert **(Fig. 7D),** er führt den letzten Sendevorgang des Master mit identischer Nachricht und Reihenfolge erneut durch (**Fig. 7D, 7E**) und setzt anschließend die Übertragung mit weiteren Nachrichten im lokalen Sendepuffer fort **(Fig. 7F).**

Auf der Empfangsseite können beim beschriebenen Verfahren Duplikate auftreten (Nachrichten, welche empfangsseitig bereits vom Master erhalten wurden und vom Slave erneut übertragen werden). Diese lassen sich von den Empfängern einfach erkennen (und verwerfen), da der Slave Nachrichten mit einer zum Master konsistenten Nachrichtenkennung (z.B. Sequenznummer) überträgt (vergl. **Fig. 4D** bzw. **Fig. 7E**).

Zur Steigerung der Effizienz der Übertragung läßt sich das Verfahren auch auf eine blockorientierte Übertragung und Synchronisation erweitern. Nachrichten werden gesammelt, in Blöcke gepackt und gemäß einer kombinierten Zeit-/Mengensteuerung übertragen. Zusätzlich zu den Kennungen einzelner Nachrichten werden die Blöcke durch Angabe des Absenders und einer Block-Sequenznummer mit einer zusätzlichen Kennung versehen. Blöcke von Master und Slave mit gleicher Kennung müssen auch identische Nachrichten mit jeweils übereinstimmender Anzahl und Abfolge beinhalten. Dies wird sendeseitig durch die Reihenfolge-Synchronisation der Blockinhalte, d.h. der einzelnen Nachrichten eines Blocks realisiert, durch Übertragung der Nachrichtenblöcke selbst oder durch Übertragung der Kennungen und Abfolge der Nachrichten eines Blocks. Die Anzeige des Master an den Slave, daß ein Nachrichtenblock an alle Empfänger übertragen wurde (Übertragungs-Synchronisation) und die empfangsseitige Duplikaterkennung können über die Block-Kennung erfolgen.

## Patentansprüche

1. Verfahren zur hochzuverlässigen und konsistenten Übertragung von Nachrichten einer redundant ausgeführten Informationsquelle, mit einer als Master bezeichneten ersten Informationsquelle und einer als Slave bezeichneten zweiten Informationsquelle, die nach einem Master/Slave-Prinzip arbeitet, an mehrere Empfänger in einem verteilten System nach dem Erzeuger/Verbraucher-Prinzip, **dadurch gekennzeichnet, daß**
a) Master und Slave gleiche Informationen erhalten und unabhängig voneinander verarbeiten,
b) Master und Slave bezüglich Nachrichteninhalt und zugeordneter Kennung sendeseitig identische Nachrichten mit gleicher oder unterschiedlicher Nachrichtenreihenfolge erzeugen,
c) Master und Slave sich gegenseitig bezüglich Funktionsfähigkeit überwachen und bezüglich der Reihenfolge und Nachrichtenübertragung synchronisieren,
d) in fehlerfreiem Betrieb nur eine der Informationsquellen, der Master, sendet und im Fehlerfall selbsttätig eine Umschaltung auf die ungestörte Quelle erfolgt,
e) die redundant ausgeführte Informationsquelle als führende Instanz für verteilte Datenbestände definiert wird, welche allen weiteren Datenbeständen, gemäß dem Prinzip der Führungskompetenz, Änderungsinformation aufprägt, und
f) Nachrichten gesichert oder unter Anwendung eines Verfahrens zur konsistenten Nachrichtenübertragung übertragen werden.

2. Verfahren nach Anspruch 1, **dadurch gekennzeichnet, daß** die Nachrichtenübertragung in streng sequentiellen und verifizierten Schritten abläuft, wobei
a) im ungestörten Fall gilt:
a1) der Slave synchronisiert den Master bezüglich der nächsten zu übertragenden Nachricht, entsprechend dem Prinzip der Reihenfolge-Synchronisation,
a2) der Master überträgt die jeweilige Nachricht zu den Empfängern, und
a3) der Master synchronisiert den Slave bezüglich der an die Empfänger übertragenen Nachricht, entsprechend dem Prinzip der Übertragungs-Synchronisation, der Slave streicht die synchronisierte und übertragene Nachricht aus seinem lokalen Sendepuffer,
b) bei Ausfall der aktiven Informationsquelle, d.h. des Masters, der an beliebiger Stelle der Übertragungsabfolge auftreten kann, gilt:
b1) der Slave erkennt den Masterausfall über die Maßnahmen der gegegenseitigen Überwachung und übernimmt die Sendeaktivität,
b2) der Slave führt die Übertragung mit der bezüglich Reihenfolge synchronisierten, vom Master aber noch nicht als übertragen angezeigten Nachricht erneut durch, wobei mögliche Duplikate von den Empfängern anhand von Nachrichtenkennungen erkannt werden, und
b3) der Slave führt die Übertragung der weiteren Nachrichten fort.

3. Verfahren nach Anspruch 2, dadurch abgewandelt, daß der Master den Slave bezüglich der nächsten, zu übertragenden Nachricht synchronisiert, entsprechend dem Prinzip der Reihenfolge-Synchronisation.

4. Verfahren nach einem der vorstehenden Ansprüche, **dadurch gekennzeichnet, daß** standadisierte Bussysteme und Kommunikationsprotokolle verwendet werden.

5. Verfahren nach einem der vorstehenden Ansprüche, **dadurch gekennzeichnet, daß** Nachrichten blockweise übertragen werden und die Verfahrensschritte nach einem blockorientierten Konzept erfolgen.

## Claims

1. A method for the highly reliable and consistent transmission of messages of a redundantly configured information source, comprising a first information source designated as a master and a second information source designated as a slave and working according to the master-and-slave principle, to several receivers in a distributed system according to the generator-and-consumer principle, **characterized in that**
a) the master and slave receive the same information and operate independently from each other;
b) concerning the message content and the allocated identifier the master and slave produce identical messages on the transmission side with the same or different message sequences;
c) master and slave monitor each other with respect to operativeness and synchronize with respect to sequence and message transmission;
d) only one of the information sources, namely the master, transmits in faultless operation and in the case of fault there is automatically a changeover to the undisturbed source;
e) the redundantly configured information source is defined as the leading instance for distributed databases which imposes change information on all further databases according to the principle of control competence, and
f) messages are backed up or transmitted by applying a process for consistent message transmission.

2. A method as claimed in claim 1, **characterized in that** the message transmission occurs in strictly sequential and verified steps, with
a) the following applying in the undisturbed case:
a1) the slave synchronizes the master with respect to the next message to be transmitted according to the principle of sequence synchronization;
a2) the master transmits the respective message to the receivers, and
a3) the master synchronizes the slave with respect to the message transmitted to the receivers according to the principle of transmission synchronization, the salve deletes the synchronized and transmitted message from its local send buffer;
b) the following applying in the case of the failure of the active information source, i.e. the master, which may occur at any point within the transmission sequence:
b1) the slave recognizes the failure of the master via the measures of mutual monitoring and assumes the send activity;
b2) the slave performs the transmission again with the message which is synchronized with respect to sequence but indicated by the master as not yet transmitted, with possible duplicates being recognized by the receiver on the basis of message identifiers, and
b3) the slave performs the transmission of the further messages.

3. A method as claimed in claim 2, **characterized in that** the master synchronizes the slave with respect to the next message to be transmitted, according to the principle of sequence synchronization.

4. A method as claimed in one of the preceding claims, **characterized in that** standardized bus systems and communication protocols are used.

5. A method as claimed in one of the preceding claims, **characterized in that** the messages are transmitted blockwise and the process steps occur according to a block-oriented concept.

## Revendications

1. Procédé pour la transmission très fiable et constante à plusieurs récepteurs dans un système distribué, selon le principe producteur-consommateur, de messages d'une source d'informations redondante, avec une première source d'informations appelée maître et une seconde source d'information appelée esclave, qui fonctionne selon un principe maître-esclave, **caractérisé en ce que** :
a) le maître et l'esclave contiennent les mêmes informations et fonctionnent indépendamment l'un de l'autre,
b) le maître et l'esclave produisent des messages identiques en ce qui concerne leur contenu et leur identification selon un ordre de messages identique ou différent,
c) le mettre et l'esclave surveillent mutuellement leur capacité de fonctionnement et se synchronisent en ce qui concerne l'ordre et la transmission des messages,
d) une seule des sources d'information - le maître - émet en l'absence de défaut et une commutation automatique vers la source non perturbée a lieu en cas de défaut,
e) la source d'information redondante est définie comme instance dirigeante pour des stocks de données distribués, qui transmet à tous les autres stocks de données des informations de modification selon le principe de la compétence de gestion, et
f) les messages sont sauvegardés ou transmis en utilisant un procédé permettant une transmission cohérente des messages.

2. Procédé selon la revendication 1, **caractérisé en ce que** la transmission des messages se fait en étapes strictement séquentielles et vérifiées, de telle manière que :
a) en l'absence de défaut,
a1) l'esclave synchronise le maître par rapport au prochain message à transmettre, selon le principe de synchronisation de l'ordre,
a2) le maître transmet chaque message aux récepteurs et
a3) le maître synchronise l'esclave par rapport au message transmis aux récepteurs, selon le principe de synchronisation de la transmission, l'esclave supprime le message synchronisé et transmis de son tampon d'émission local,
b) en cas de défaillance de la source d'information active, c'est-à-dire du maître, qui peut se produire en tout point de la séquence de transmission,
b1) l'esclave détecte la défaillance du maître grâce à la surveillance mutuelle et prend en charge l'activité d'émission,
b2) l'esclave recommence la transmission du message synchronisé par rapport à l'ordre mais que le maître n'a pas encore signalé comme étant transmis, les récepteurs pouvant détecter les doublons éventuels à l'aide d'une reconnaissance des messages, et
b3) l'esclave poursuit la transmission des autres messages.

3. Procédé selon la revendication 2, modifié en ce que le maître synchronise l'esclave par rapport au message à transmettre suivant selon le principe de la synchronisation de l'ordre.

4. Procédé selon l'une quelconque des revendications précédentes, **caractérisé en ce qu'**il met en oeuvre des systèmes de bus et des protocoles de communication standardisés.

5. Procédé selon l'une quelconque des revendications précédentes, **caractérisé en ce que** les messages sont transmis par blocs et les étapes de procédé sont exécutées selon un concept par blocs.
